Europäisches Patentamt

European Patent Office

Office européen des brevets

(11) Numéro de publication: **0 308 312**
**A1**

## (12) DEMANDE DE BREVET EUROPEEN

(21) Numéro de dépôt: **88402294.8**

(22) Date de dépôt: **12.09.88**

(51) Int. Cl.⁴: **B 60 K 17/04**

(30) Priorité: **11.09.87 FR 8712602**

(43) Date de publication de la demande:
**22.03.89 Bulletin 89/12**

(84) Etats contractants désignés:
**AT BE CH DE ES FR GB GR IT LI LU NL SE**

(71) Demandeur: **Guilbard, Paul**
**Z.I. la Chaume Dissay**
**F-86130 Jaunay-Clan (FR)**

(72) Inventeur: **Guilbard, Paul**
**Z.I. la Chaume Dissay**
**F-86130 Jaunay-Clan (FR)**

(74) Mandataire: **Rodhain, Claude et al**
**Cabinet Claude Rodhain 30, rue la Boétie**
**F-75008 Paris (FR)**

(54) Dispositif de transmission pour véhicules automobiles.

㊄ L'invention concerne un dispositif de transmission pour véhicule automobile comportant un différentiel entre deux roues motrices disposées aux extrémités opposées d'un essieu moteur.

Selon l'invention, le dispositif comporte un mécanisme du type train épicycloïdal interposé entre chaque roue motrice et la sortie correspondante du différentiel, et ledit mécanisme comporte une couronne fixe (3), un porte-satellites (5) relié à l'arbre de sortie (7) du différentiel, et un planétaire (6) auquel est fixé un arbre (8) relié à ladite roue.

L'invention est utilisable sur les véhicules automobiles.

EP 0 308 312 A1

## Description

### Dispositif de transmission Pour véhicules automobiles

La présente invention concerne un dispositif de transmission pour véhicules comportant un différentiel disposé entre deux roues d'un essieu moteur. L'invention est plus particulièrement destinée aux véhicules automobiles.

Le différentiel permet d'obtenir un certain nombre d'avantages incontestables dans le domaine des voitures automobiles mais il a également des réactions trompeuses suivant les routes, notamment dans les virages serrés ou en cas de faible adhérence, par exemple sur des routes mouillées ou verglacées. Dans un virage, il se produit en effet, de manière plus ou moins sensible, un renvoi de puissance, ce qui amène le conducteur soit à réduire sa vitesse, soit à "cisailler", suivant ses capacités de conduite.

Ainsi, lorsque l'adhérence est faible, on constate un report de puissance, pouvant être très accentué, sur l'une des roues, et cette réaction gênante risque d'entraîner un dérapage que l'on ne peut pas contrôler et se terminant par un tête-à-queue pouvant être à l'origine d'un accident grave et même mortel.

La présente invention a pour but de remédier à cet inconvénient et pour objet un dispositif de transmission pour véhicule automobile qui justement permet de pallier cet inconvénient.

A cet effet, l'invention concerne un dispositif de transmission, pour véhicule automobile comportant un différentiel entre deux roues motrices disposées aux extrémités opposées d'un essieu moteur, caractérisé en ce qu'il comporte un mécanisme du type train épicycloïdal interposé entre chaque roue motrice et la sortie correspondante du différentiel, et en ce que ledit mécanisme comporte une couronne fixe, un porte-satellites relié à l'arbre de sortie du différentiel, et un planétaire auquel est fixé un arbre relié à ladite roue.

Grâce à cette nouvelle disposition, on modifie le point d'application de la puissance motrice, qui se trouvait jusqu'à présent au niveau du différentiel, et on le reporte au niveau de chacune des roues. La présence du train épicycloïdal confère à la roue une certaine indépendance vis-à-vis du différentiel, ce qui permet d'équilibrer la puissance entre ces roues et annihile l'effet de "poussée" dans les virages. Par ailleurs, l'adhérence est fortement augmentée et cela peut en particulier être constaté par le fait que lors des démarrages, le véhicule est plaqué au sol .

Suivant l'adhérence désirée, on peut choisir des trains épicycloïdaux dont les rapports des différents pignons sont égaux ou sensiblement égaux à 1 ou dont ces rapports sont tels qu'ils agissent en multiplicateurs du rapport de transmission (c'est-à-dire nettement supérieurs à 1).

Avantageusement, les différents pignons du train épicycloïdal sont de préférence des pignons à denture oblique, ce qui permet de réduire le bruit.

Selon une forme de réalisation de l'invention, ce train épicycloïdal est monté au niveau du moyeu de roue, de préférence dans un boîtier étanche muni d'un reniflard d'huile.

D'autres caractéristiques et avantages de l'invention ressortiront de la description qui suit ainsi que des dessins ci-annexés sur lesquels :

- la figure 1 est une vue en coupe longitudinale éclatée d'un dispositif selon l'invention;
- et la figure 2 est une vue en coupe transversale du même dispositif.

Comme on l'a déjà mentionné, les effets nuisibles de poussée dans les virages se ressentent de manière plus ou moins sensible dans les véhicules automobiles ; ils sont particulièrement indésirables dans le cas où le conducteur du véhicule doit ralentir fortement dans le virage ; dans ce cas, le conducteur est amené à effectuer des manoeuvres de "cisaillement", surtout lorsque l'adhérence de la chaussée est réduite.

Conformément à la présente invention, dans un véhicule automobile comportant de manière classique un différentiel disposé éventuellement par l'intermédiaire de cardans entre deux roues motrices disposées aux extrémités opposées d'un même essieu moteur, un mécanisme du type train épicycloïdal est interposé entre la sortie du différentiel (ou du cardan) et chaque roue motrice. Cela peut s'appliquer aussi bien aux véhicules à deux ou à quatre roues motrices dites du type à transmission intégrale. L'invention s'applique également aux véhicules de type tout terrain comportant plusieurs essieux moteurs ; le train épicycloïdal selon l'invention peut être placé comme on l'a vu en bout d'un pont rigide comme d'un pont à cardans.

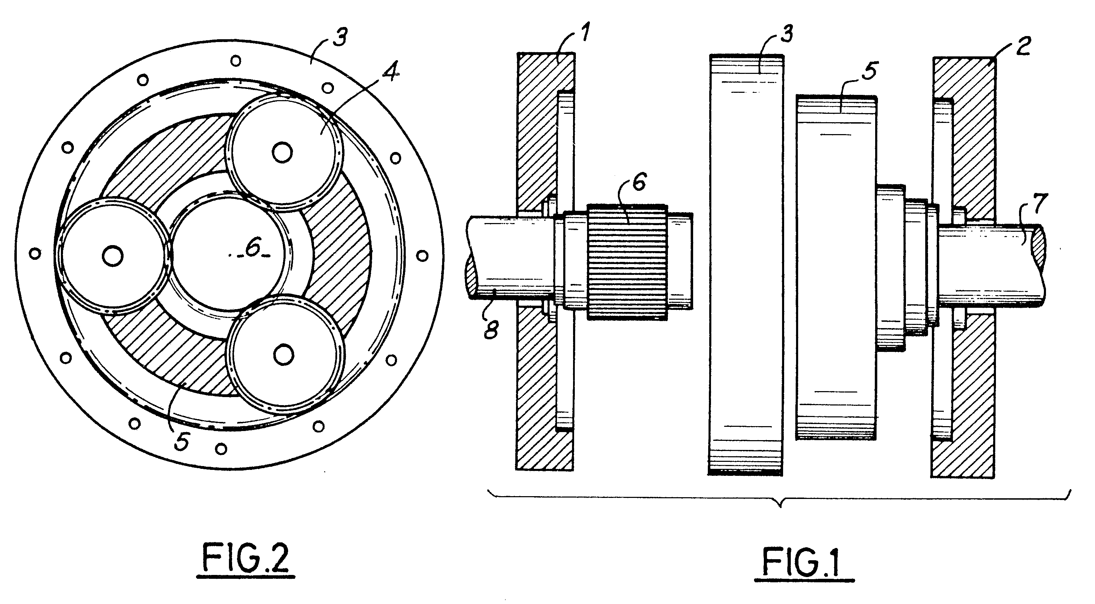

Un tel train épicycloïdal est représenté sur les figures 1 et 2 ; il est constitué d'un boîtier étanche formé de deux demi-coquilles 1 et 2 auxquelles vient se fixer une couronne fixe 3 munie d'une denture intérieure. Le train épicycloïdal comporte des pignons satellites 4 qui sont portés par un porte-satellites 5. Ces satellites 4 engrènent d'une part la couronne fixe 3 et d'autre part un planétaire 6 qui transmet le mouvement à la roue. Les pignons satellites sont au nombre de trois dans l'exemple représenté mais on peut utiliser un nombre de satellites compris entre 2 et 6.

Les dimensions respectives des pignons satellites, du planétaire et de la couronne fixe sont choisies de manière à obtenir un rapport de transmission entre le planétaire 6 et le support de satellites 5 proche de l'unité, et en tout cas sans réduction notable de vitesse. Le boîtier est fermé de manière étanche sur la couronne fixe 3 et il comporte avantageusement un reniflard d'huile non représenté. Devant être maintenu immobile en rotation et disposé le plus près possible de la roue, il est ici fixé au bras support de suspension/transmission qui porte le moyeu de la roue ; ainsi, la couronne 3 est elle-meme fixe ; cependant, en fonction du véhicule, un autre organe fixe situé à proximité de la roue peut être utilisé pour la solidarisation du boîtier au véhicule.

Le porte-satellites 5 est fixé à l'arbre de sortie 7 du différentiel (ou d'un cardan relié à ce dernier), qui traverse la demi-coquille 2 de manière étanche. Solidaire du planétaire 6, l'axe de sortie 8 du train épicycloïdal traverse également de manière étanche la demi-coquille 1, pour entraîner la roue concernée, à laquelle il est relié. Les différents engrenages du train épicycloïdal sont de préférence des engrenages à denture oblique, ce qui permet de réduire notablement le bruit de roulement.

Lorsque l'on désire un rapport voisin de l'unité, cela peut être obtenu en utilisant des satellites doubles, c'est-à-dire constitués de deux pignons accolés de diamètres différents ; le grand pignon du satellite engrènant la couronne extérieure fixe et le petit pignon le planétaire ; ce dispositif risque cependant d'augmenter notablement les pertes d'énergie.

Comme indiqué plus haut, la conséquence de l'interposition du train épicycloïdal n'est pas une réduction de vitesse, mais un report de la puissance exercée par le moteur, du différentiel, c'est-à-dire de la zone centrale de l'essieu moteur, vers chacune des deux roues.

De cette manière, les deux roues présentent une certaine indépendance vis-à-vis du différentiel, ce qui permet d'éviter un déséquilibre dans la répartition des puissances dans les virages. On constate par ailleurs une amélioration lors du démarrage, car dans les véhicules équipés d'un dispositif de transmission selon l'invention, il se produit au démarrage, un effet d'écrasement du véhicule, ce qui augmente son adhérence et par suite ses performances.

Dans les lignes droites, le comportement des véhicules équipés d'un dispositif de transmission selon l'invention est également amélioré par un effet de placage au sol du fait du report de la puissance motrice sur les roues. De plus, étant donné que les roues agissent de manière semi-indépendante par rapport au différentiel, la direction du véhicule est plus précise, car elle n'est plus influencée par le comportement du différentiel.

Bien entendu, l'invention n'est pas limitée à la forme de réalisation ci-dessus décrite et représentée, et on pourra en prévoir d'autres formes sans sortir de son cadre.

## Revendications

1) Dispositif de transmission, pour véhicule automobile comportant un différentiel entre deux roues motrices disposées aux extrémités opposées d'un essieu moteur, caractérisé en ce qu'il comporte un mécanisme du type train épicycloïdal interposé entre chaque roue motrice et la sortie correspondante du différentiel, et en ce que ledit mécanisme comporte une couronne fixe (3), un porte-satellites (5) relié à l'arbre de sortie (7) du différentiel, et un planétaire (6) auquel est fixé un arbre (8) relié à ladite roue.

2) Dispositif de transmission selon la revendication 1, caractérisé en ce que le rapport de transmission du train épicycloïdal est égal ou sensiblement égal à 1.

3) Dispositif de transmission selon la revendication 1, caractérisé en ce que le rapport de transmission du train épicycloïdal est supérieur à 1 de telle sorte que le train soit multiplicateur.

4) Dispositif de transmission selon l'une quelconque des revendications 1 à 3, caractérisé en ce que les différents pignons du train épicycloïdal sont des pignons à denture oblique.

5) Dispositif de transmission selon l'une quelconque des revendications 1 à 4, caractérisé en ce que le train épicycloïdal est monté dans un boîtier (1, 2) et la couronne (3) est fixée audit boîtier.

6) Dispositif de transmission selon l'une quelconque des revendications 1 à 5, caractérisé en ce que le train épicycloïdal est monté à proximité immédiate de la roue.

7) Dispositif de transmission selon l'une quelconque des revendications 1 à 6, caractérisé en ce que le train épicycloïdal est monté sur un bras support de suspension/transmission du véhicule portant la roue.

8) Dispositif de transmission selon la revendication 5, caractérisé en ce que ledit boîtier (1, 2) est étanche et muni d'un reniflard.

9) Dispositif de transmission selon l'une quelconque des revendications 1 à 8, caractérisé en ce qu'il comporte des satellites constitués de deux pignons accolés de diamètres différents, le pignon de plus grand diamètre engrenant la couronne fixe, et le pignon de plus petit diamètre engrenant le planétaire.

FIG.1

FIG.2

Office européen
des brevets

**RAPPORT DE RECHERCHE EUROPEENNE**

Numero de la demande

EP  88 40 2294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 774 327 (MALEYRE)<br>* En entier *<br>--- | 1-4,6,9 | B 60 K 17/04 |
| A | FR-A-2 195 200 (HERWAY THORN)<br>* Page 2, lignes 6-16,21-26; figures *<br>--- | 1,5,7 | |
| A | US-A-1 974 230 (ARMINGTON)<br>* Page 1, lignes 59-63,88-95; figure 1 *<br>----- | 1,5,6 | |

|  | DOMAINES TECHNIQUES RECHERCHES (Int. Cl.4) |
|---|---|
|  | B 60 K<br>F 16 H |

**Le présent rapport a été établi pour toutes les revendications**

| Lieu de la recherche | Date d'achèvement de la recherche | Examinateur |
|---|---|---|
| LA HAYE | 24-10-1988 | MENDE H. |